# FASCICULE DE BREVET EUROPEEN

(11) **EP 2 601 152 B1**
(45) Date de publication et mention de la délivrance du brevet: **07.09.2016**
(21) Numéro de dépôt: 11752595.6
(22) Date de dépôt: 20.07.2011
(51) Int. Cl.: C04B 24/04, C04B 28/02, C04B 40/00

(54) **COMPOSITION PULVERULENTE DE MORTIER A ADHERENCE AMELIOREE**
PULVERFÖRMIGE MÖRTELZUSAMMENSETZUNG MIT VERBESSERTER HAFTUNG
PULVERULENT MORTAR COMPOSITION HAVING IMPROVED ADHESION

(30) Priorité: 03.08.2010 FR 1056412
(43) Date de publication de la demande: 12.06.2013
(73) Titulaire: BOSTIK SA, 93210 La Plaine Saint Denis (FR)
(72) Inventeur: KURYATNYK, Tetyana, F-77550 Moissy Cramayel (FR); MABIRE, Philippe, F-91080 Courcouronnes (FR); FOUQUAY, Stéphane, F-76130 Mont Saint Aignan (FR)
(74) Mandataire: Tran, Eugénie
(86) Numéro de dépôt international: PCT/FR2011/051757
(87) Numéro de publication internationale: WO 2012/017169

(56) Documents cités:
- EP-A1- 2 128 110
- WO-A1-2010/028870
- WO-A2-2006/084588
- DE-U1-202006 016 797

## Description

La présente invention a pour objet une composition pulvérulente de mortier, notamment en vue d'une utilisation comme colle pour carrelage, qui permet d'obtenir des caractéristiques d'adhérence améliorées pour les carreaux de céramique collés, notamment après contact avec l'eau, tout en présentant une quantité de poussières inhalables réduite.

Les mortiers destinés à une utilisation comme colle pour carrelage sont également appelés mortiers-colles. Ils sont bien connus et largement utilisés pour fixer les carrelages (désignés également par les termes de revêtements ou carreaux de céramique) sur des supports tant horizontaux (sols ou chapes) que verticaux (murs et cloisons), que ce soit à l'intérieur ou à l'extérieur des habitations. Ils se présentent sous la forme de poudre et comprennent différents ingrédients, notamment :
- des liants, et
- des granulats de matériaux inertes, susceptibles d'être agglomérés en phase aqueuse au moyen desdits liants pour former un agrégat.

Les liants mis en oeuvre peuvent être minéraux ou organiques.

Les liants minéraux comprennent des liants hydrauliques (c'est-à-dire des liants insolubles dans l'eau qui font prise et durcissent par réaction chimique avec l'eau) et également des liants non hydrauliques (autrement dit des liants qui sont solubles dans l'eau et durcissent par séchage).

Parmi les liants minéraux hydrauliques, on peut citer :
- les ciments, comme le ciment Portland, les ciments composés (mélange de ciment Portland et d'un autre produit tel que laitier de haut fourneau, cendres volantes, schistes calcinés, calcaire, métakaolin), les ciments alumineux, les ciments sulfo-alumineux ;
- la chaux hydraulique.

Parmi les liants minéraux non hydrauliques, on peut citer la chaux aérienne, les sulfates comme le gypse, le plâtre, l'anhydrite.

Quant aux liants organiques, ils sont généralement à base de résines d'origine animale ou végétale ou plus souvent de résines de synthèse.

On peut donner comme exemples de granulats de matériaux inertes : le sable (notamment siliceux ou calcaire), les gravillons, l'argile expansée, la pouzzolane, les billes de verres, les barytes, hématites, laitiers, ou encore la brique ou le béton broyés.

La poudre sous la forme de laquelle se présente un mortier, notamment un mortier-colle, est obtenue industriellement par simple mélange de ses divers ingrédients qui se présentent eux-mêmes généralement sous la forme de solides à l'état pulvérulent. Cette poudre est mise en oeuvre, lors de l'utilisation, par mélange avec de l'eau (également désignée par le terme de gâchage). Le produit ainsi obtenu a un aspect homogène et plastique, et une consistance qui lui permet, dans le cas d'un mortier-colle, d'être étalé sur le support à carreler et/ou sur l'envers des carreaux (à la truelle et/ou à la spatule dentée), de manière à constituer une couche régulière de quelques millimètres d'épaisseur qui unit les carreaux de céramique au support, résultant en un assemblage cohésif stable dans le temps.

Les particules solides constitutives des mortiers ont une taille qui peut aller d'une dizaine à quelques centaines de micromètres et être, pour certaines, susceptibles de produire une émission de poussières en suspension dans l'air et potentiellement inhalables. Cette émission de poussières inhalables, qui est susceptible de se produire soit au stade de la fabrication industrielle soit au moment de la manipulation du produit par l'utilisateur, avant et pendant le gâchage à l'eau, est un inconvénient des mortiers, notamment des mortiers-colles, qui pose des problèmes d'hygiène industrielle et fait l'objet d'une réglementation sur la protection des travailleurs.

La demande de brevet WO 2006/084588 concerne le problème de la réduction des émissions de poussière durant la manipulation de matériaux pulvérulents à prise hydraulique ou à base de ciment. Elle enseigne dans ce but l'utilisation d' hydrocarbures ou mélanges d'hydrocarbures, notamment liquides, et de préférence d'hydrocarbures aliphatiques saturés comme les huiles minérales.

La demande de brevet WO 2010/028870 aussi concerne le problème de la réduction des émissions de poussière durant la manipulation de matériaux pulvérulents. Elle enseigne dans ce but l'utilisation d' hydrocarbures cyclé comme des di, tri ou tétra esters de cyclohexane.

La demande internationale WO 2007/051817 préconise l'incorporation, dans la composition de mortier, d'un additif fluide constitué d'au moins une substance organique hydrocarbonée apolaire choisie parmi les huiles minérales, les huiles paraffiniques, les paraffines ou les polyoléfines. Selon cette demande, l'incorporation dudit additif fluide à la composition de mortier n'entraîne aucune dégradation de ses caractéristiques physico-chimiques, incluant les caractéristiques d'adhérence.

Les caractéristiques d'adhérence figurent au premier rang des performances finales attendues des mortier-colles pour carrelages (ou revêtements de céramique). Ces caractéristiques sont généralement quantifiées par la détermination des contraintes maximales de rupture qui sont mesurées par des essais de résistance à l'arrachement effectués sur des carreaux collés sur une dalle de béton dans des conditions standards, conformément à la norme européenne EN 1348. Ces essais peuvent être effectués sur un assemblage qui, après sa réalisation, a été au préalable :
- soit simplement stocké durant environ 1 mois à température ambiante (pour la mesure de l'adhérence à sec),
- soit soumis à une immersion de 3 semaines dans l'eau (pour la mesure de l"adhérence après contact avec l'eau).

La détermination de l'adhérence après contact avec l'eau est particulièrement importante pour l'évaluation de la stabilité de l'assemblage qui résulte du collage d'un revêtement céramique sur un support extérieur à une habitation, et qui est donc exposé aux intempéries : il peut s'agir par exemple d'une façade ou d'une terrasse carrelées, ou encore d'un carrelage destiné au revêtement du bassin d'une piscine.

Contrairement à l'enseignement du document WO 2007/051817, la demanderesse a à présent trouvé, sur la base de nombreux essais, que l'introduction dans un mortier-colle d'une substance organique hydrocarbonée apolaire, telle qu'une huile d'hydrocarbures, a pour effet une diminution de l'adhérence, et tout particulièrement de l'adhérence après contact avec l'eau.

La présente invention a pour but de proposer une composition pulvérulente de mortier, utilisable notamment comme mortier-colle, qui comprend un additif fluide assurant à la composition une émission de poussières inhalables plus faible, et qui offre de plus d'excellentes performances d'adhérence à sec et, plus particulièrement, d'adhérence après contact avec l'eau.

L'invention a donc pour objet une composition pulvérulente de mortier, qui comprend :
- de 10 à 60 % d'un liant minéral,
- de 40 à 90 % d'un matériau inerte sous forme de granulat susceptible d'être aggloméré en phase aqueuse au moyen dudit liant,
- de 0,2 à 1 % d'un additif fluide comprenant de 25 à 100 % d'un composé hydrocarboné linéaire ou ramifié, saturé ou insaturé (i) qui est liquide à température ambiante et qui inclut un ou plusieurs groupe ester -COO- dont le poids total, relatif à la masse molaire dudit composé (i), est compris entre 20 et 50 % .

Il a été trouvé que le choix de ce composé organique polaire spécifique conduit à un mortier-colle possédant, outre une émission réduite en poussières inhalables, de hautes performances en matière d' adhérence, et notamment d'adhérence après contact avec l'eau. Avantageusement l'adhérence après contact avec l'eau est maintenue à un niveau très élevé, supérieur ou égal à 0,95 MPa.

En l'absence d'indications contraires, il est précisé que les pourcentages utilisés dans le présent texte pour quantifier la teneur en composants de la composition selon l'invention ou de l'additif fluide sont des pourcentages poids/poids. De même, l'article indéfini « un » ou « une » utilisé pour désigner les composants desdits composition ou additif doit s'entendre de «un ou plusieurs » composants.

Le liant minéral, hydraulique ou non hydraulique, mis en oeuvre dans la composition de mortier selon l'invention peut être choisi parmi ceux cités précédemment, pris isolément ou en mélange.

Le granulat de matériau inerte peut également être sélectionné parmi les matériaux cités précédemment, pris isolément ou en mélange.

On utilise de préférence comme liant minéral du ciment, et encore plus préférentiellement du ciment Portland et/ou du ciment alumineux et comme granulat de matériau inerte du sable, notamment siliceux ou calcaire.

Le composé (i) compris dans l'additif fluide incorporé dans la composition pulvérulente selon l'invention est de préférence un mono, di, tri ou tétra ester (ou un mélange de tels composés), que l'on désigne dans la suite du présent texte par la dénomination de « huile ester ».

Selon une variante préférée de la composition selon l'invention, le composé (i) est choisi dans le groupe comprenant :
(a) les mono-esters de formule :

   (I) R¹-A-R²

   dans laquelle :
   - R¹ et R² sont identiques ou différents et représentent un radical hydrocarboné linéaire ou ramifié, saturé ou insaturé, comprenant de 1 à 10 atomes de carbone et éventuellement substitué par un groupe -OH ou -SH ;
   - A représente un groupe ester de formule -(CO)O- ou -O(CO)- ;
(b) les di-esters de formule :

   (II) R³-A¹-R⁴₋A²-R⁵

   dans laquelle :
   - R³ et R⁵ sont identiques ou différents et représentent un radical hydrocarboné linéaire ou ramifié, saturé ou insaturé, comprenant de 1 à 20 atomes de carbone et éventuellement substitué par un groupe -OH ou -SH ;
   - R⁴ est un radical divalent dérivant du radical monovalent ayant la même signification que les radicaux R³ ou R⁵ définis précédemment ;
   - A¹ et A² sont identiques ou différents et ont la même signification que le radical A défini précédemment ;
(c) les tri-esters obtenus par condensation :
   - d'un acide carboxylique linéaire ou ramifié, saturé ou insaturé, comprenant de 2 à 20 atomes de carbone, éventuellement substitué par un groupe -OH ou - SH, avec
   - un composé hydrocarboné, linéaire ou ramifié, saturé ou insaturé, comprenant de 3 à 10 atomes de carbone parmi lesquels 3 atomes distincts sont liés chacun à un groupe -OH ; et
(d) les tétra-esters obtenus par condensation :
   - d'un acide carboxylique linéaire ou ramifié, saturé ou insaturé, comprenant de 2 à 20 atomes de carbone, éventuellement substitué par un groupe -OH ou - SH, avec
   - un composé hydrocarboné, linéaire ou ramifié, saturé ou insaturé, comprenant de 4 à 10 atomes de carbone parmi lesquels 4 atomes distincts sont liés chacun à un groupe -OH.

On peut donner comme exemple de composés (i) les composés suivants, largement disponibles au plan commercial :
- en tant que mono-ester : le lactate de 2-éthylhexyle (également dénommé le 2-ethylhexyl 2-hydroxypropanoate) de formule :

   H₃C-CH(OH)-CO-OCH₂-CH(C₂H₅)[(CH₂)₃-CH₃]

   (poids molaire du groupe -COO- égal à 22%)
- en tant que di-ester :
   - l'ester de diéthyle de l'acide adipique (ou adipate de diéthyle), de formule :

      EtOCO-(CH₂)₄-COOEt

      (poids molaire du groupe -COO- égal à 43 %)
   - l'ester de diisobutyle de l'acide adipique (ou adipate de diisobutyle) de formule :

      iBuOCO-(CH₂)₄-COOiBu

      (poids molaire du groupe -COO- égal à 34 %)
- en tant que tri ester le triester de glycérol et de l'acide caprique (ou tricaprylate de glycérol), de formule :

   [(C₉H₁₉)COO]CH₂-CH[OCO(C₉H₁₉)]-CH₂[OCO(C₉H₁₉)]

   (poids molaire du groupe -COO- égal à 24 %)
- en tant que tétra ester, le tétraester de pentaerythritol et de l'acide caprique (ou tétracaprylate de pentaérythritol), de formule :

   C(CH₂-OCO-C₉H₁₉)₄

   (poids molaire du groupe -COO- égal à 23 %)

Un composé organique polaire (i) incluant un ou plusieurs groupe ester pour un poids total compris entre 30 et 50 % est plus particulièrement préféré, tel que l'adipate de diéthyle et/ou de diisobutyle.

Selon une variante de la composition selon l'invention, l'additif fluide peut comprendre outre les 25 à 100 % du composé organique polaire (i) susdit, de 0 à 75 % d'un composé organique apolaire (ii) liquide à température ambiante. Ledit composé (ii) est généralement choisi parmi les huiles d'origine minérale, les huiles paraffiniques, les polyoléfines ou les mélanges de ces substances. On le désigne ci-après également par l'appellation d' « huile d'hydrocarbures ». On peut citer comme exemples de produits commerciaux couverts par (ii) :
- le Lytol et le Semtol 70/28 qui sont des huiles blanches minérales commercialisées par la société Sonneborn ayant pour viscosité (mesurée à 23 °C par un viscosimètre Brookfield équipé du mobile 2V100 selon la norme ASTM D 445) les valeurs respectives : 28 et 56 mPa.s.
- l'Hydroseal G3H (de la société Total) qui est un mélange de distillats moyens de pétrole hydrotraités ayant une viscosité (mesurée dans les mêmes conditions que précédemment) de 24 mPa.s,
- le Nexbase® 2002 (Neste Oil) qui est une huile synthétique constituée essentiellement de 1-décène dimérisé et hydrogéné.

Alors que l'introduction, dans une composition de mortier-colle, d'un additif fluide consistant exclusivement du composé (ii) conduit à une diminution des caractéristiques d'adhérence, l'introduction du composé (i) ou de son mélange avec le composé (ii) dans les proportions indiquées permet avantageusement de maintenir les performances d'adhérence, y compris après contact avec l'eau, à un niveau très élevé, de préférence supérieur ou égal à 0,95 MPa.

Selon une variante préférée de l'invention, la composition comprend de 20 à 40 % du liant minéral et de 60 à 70 % du matériau inerte sous forme de granulat.

Selon encore une variante préférée de l'invention, l'additif fluide est compris dans la composition de mortier à raison de 0,3 à 0,6 %.

On préfère une composition selon l'invention qui comprend en outre, comme liant organique, de 1 à 10 %, de préférence 2 à 7 %, d'un copolymère comprenant un (ou plusieurs) ester vinylique et, éventuellement, un ester maléïque. De tels produits sont couramment disponibles dans le commerce souvent en mélange avec des charges inertes, comme par exemple l'Axilat™ UP 620E (environ 90 % en poids de copolymère d'acétate de vinyle, de versatate de vinyle et d'ester maléïque) et l'Axilat™ PAV 51 (environ 90 % en poids de copolymère d'acétate de vinyle et de versatate de vinyle) de la société Hexion.

Selon une variante de la composition selon l'invention, particulièrement préférée pour ses hautes performances d'adhérence, la composition comprend de 5 à 6 % de copolymère d'acétate de vinyle, de versatate de vinyle et d'ester maléïque.

La composition de mortier selon l'invention peut également comprendre des ingrédients connus de l'art, tels que :
- des charges de calcaire, dolomie et/ou silice sous forme de particules de taille inférieure à 50 µm, à raison d'une quantité allant de 0 à 25 %, de préférence de 2 à 15 % ;
- un agent rhéologique et/ou rétenteur d'eau, tel qu'un éther cellulosique, un dérivé d'amidon ou de gomme de guar, ou encore des fibres de cellulose, à raison d'une quantité allant de 0,3 à 1 %, de préférence de 0,3 à 0,7 % ;
- un agent accélérateur (de prise ou de durcissement) par exemple à base de sels de formiate ou de chlorure, à raison d'une quantité allant de 0,2 à 4 %, de préférence de 0,3 à 2 %.

La composition de mortier selon l'invention est préparée par simple mélange des ingrédients solides pulvérulents, et ajout de l'additif fluide par pulvérisation.

La présente invention concerne encore l'utilisation de la composition de mortier telle que définie précédemment pour son gâchage avec de l'eau en vue de la préparation d'un mortier, d'un enduit mural ou de rebouchage, d'un joint de carrelage ou de produits à base de ciments utilisés dans la construction.

L'utilisation en vue de la préparation d'un mortier-colle pour fixer des carreaux de céramique est tout particulièrement préférée.

Les exemples suivants sont donnés à titre purement illustratif de l'invention et ne sauraient être interprétés pour en limiter la portée.

### Exemple A (référence) : Composition de mortier-colle sans additif fluide

On prépare une composition pulvérulente de mortier-colle A par simple mélange à sec des ingrédients suivants :
- 30 % de ciment portland normalisé PC CEM I 52,5 N
- 63,6 % de sable siliceux de taille de grain inférieure à 500 µm
- 3 % d'une charge calcaire de taille inférieur à 50 µm
- 2,4 % d'Axilat™ UP 620E
- 0,6 % d'un agent accélérateur
- 0,4 % d'un agent rhéologique et/ou rétenteur d'eau.

Les caractéristiques d'adhérence du mortier-colle A sont déterminées par le test d'adhérence décrit ci-après.

### Test d'adhérence :

La composition de mortier-colle est mélangée à l'eau à raison d'environ 25 g d'eau pour 100 g de poudre, durant 90 secondes.

Puis, après un temps de repos de 5 minutes et homogénéisation à la spatule, le mélange est appliqué sur 2 supports identiques consistant chacun en une dalle de béton carrée de 40 cm de côté et 4 cm d'épaisseur, de manière à former une couche mince convenablement striée au moyen d'une spatule crantée, dont l'épaisseur est comprise entre 2 et 6 mm.

10 carreaux de grès pressés à sec de 5 cm de côté et 5 mm d'épaisseur sont ensuite placés sur chaque dalle ainsi encollée, maintenue en position horizontale, et espacés de 5 cm. Chaque carreau est alors appliqué sur la dalle au moyen d'une pression résultant de la pose d'un poids de 2 kg durant 30 s.

Les 2 assemblages obtenus sont soumis aux conditions de stockages suivantes :
- l'un est laissé durant 28 jours à 23°C et 50 % d'humidité relative, en vue de la détermination de l'adhérence à sec,
- l'autre est laissé durant 7 jours à 23°C et 50 % d'humidité relative, puis immergé durant 21 jours dans de l'eau à 23°C, en vue de la détermination de l'adhérence après contact avec l'eau.

A la fin de ce stockage, on procède pour chaque carreau des 2 assemblages précédents à une mesure de la force nécessaire pour arracher ledit carreau de la dalle en béton. Pour cela, des pièces métalliques de traction à face carrée de côté 5 cm sont fixées sur chaque carreau au moyen d'une colle structurale à haute résistance de type époxyde. Chaque pièce est alors reliée à un appareil de traction capable d'exercer sur ladite pièce une force de traction qui croit (jusqu'à l'arrachement du carreau) à raison d'une vitesse constante d'environ 250 N/s.

L'adhérence à sec et l'adhérence après contact avec l'eau sont obtenues en ramenant à la surface d'un carreau la force d'arrachement mesurée pour chacun des 10 carreaux, puis en calculant la moyenne pour chacun des 2 assemblages correspondants. Les 2 résultats sont exprimés en MPa et indiqués dans le Tableau 1.

Il est fait référence pour plus de détails à la norme européenne EN 1348.

### Exemples A1-A4 (référence) : Effet de l'ajout de 0,3 % d'une huile d'hydrocarbures sur l'adhérence du mortier-colle A :

On répète l'exemple A en ajoutant par pulvérisation à la composition pulvérulente 0,3 % en poids de l'huile d'hydrocarbures indiquée dans le Tableau 1.

On obtient les résultats d'adhérence également indiqués dans le Tableau 1.

### Exemple B (référence) : Composition de mortier-colle sans additif fluide

On répète l'exemple A en remplaçant la composition A par la composition B suivante :
- 30 % de ciment portland normalisé PC CEM I 52,5 N
- 62,6 % de sable siliceux de taille de grain inférieure à 500 µm
- 3 % d'une charge calcaire de taille inférieur à 50 µm
- 3 % d'Axilat™ UP 620E.
- 0,7 % d'un agent rhéologique et/ou rétenteur d'eau
- 0,7 % d'un agent accélérateur

On obtient les résultats d'adhérence également indiqués dans le Tableau 1.

### Exemples B1-B3 (référence) : Effet de l'ajout de 0,6 % d'une huile d'hydrocarbures sur l'adhérence du mortier-colle B :

On répète l'exemple B en ajoutant à la composition pulvérulente 0,6 % en poids de l'huile d'hydrocarbures indiquée dans le Tableau 1.

On obtient les résultats d'adhérence également indiqués dans le Tableau 1.

### Exemple C (référence) : Composition de mortier-colle sans additif fluide

On répète l'exemple A en remplaçant la composition A par la composition C suivante :
- 30 % de ciment portland normalisé PC CEM I 52,5 N
- 59,9 % de sable siliceux de taille de grain inférieure à 500 µm
- 3 % d'une charge calcaire de taille inférieur à 50 µm
- 6 % d'Axilat™ UP 620E.
- 0,7 % d'un agent rhéologique et/ou rétenteur d'eau
- 0,4 % d'un agent accélérateur

On obtient les résultats d'adhérence également indiqués dans le Tableau 1.

### Exemples C1-C3 (référence) : Effet de l'ajout de 0,6 % d'une huile d'hydrocarbures sur l'adhérence du mortier-colle C :

On répète l'exemple C en ajoutant à la composition pulvérulente 0,6 % en poids de l'huile d'hydrocarbures indiquée dans le Tableau 1.

On obtient les résultats d'adhérence également indiqués dans le Tableau 1.

Le Tableau 1 fait apparaître pour les 3 mortiers colles A, B et C une diminution de l'adhérence après contact avec l'eau résultant de l'ajout de 0,3 ou 0,6 % de l'huile d'hydrocarbures indiquée.

### Exemples 1 et 2 : Effet de l'ajout de 0,3 ou 0,6 % d'une huile ester (i) sur l'adhérence du mortier-colle B :

On répète l'exemple B en ajoutant par pulvérisation à la composition 0,3 ou 0,6 % en poids d'adipate de diéthyle comme indiqué dans le Tableau 2.

On obtient les résultats d'adhérence indiqués dans le Tableau 2.

### Exemples 3 à 8 : Effet de l'ajout de 0,3 ou 0,6 % d'une huile ester (i) sur l'adhérence du mortier-colle C :

On répète l'exemple C en ajoutant à la composition pulvérulente 0,3 ou 0,6 %, en tant qu'additif fluide, de l'huile ester (i) indiquée dans le Tableau 2.

On obtient les résultats d'adhérence également indiqués dans le Tableau 2.

### Exemples 9 à 17 : Effet de l'ajout de 0,6 % d'un additif fluide consistant d'un mélange d'huile ester et d'huile d'hydrocarbures sur l'adhérence du mortier-colle C :

On répète l'exemple C en ajoutant à la composition pulvérulente 0,6 % d'un additif fluide consistant d'un mélange de (i) et (ii) dans les pourcentages indiqués dans le Tableau 3.

On obtient les résultats d'adhérence également indiqués dans le Tableau 3.

Les compositions selon l'invention 1 à 17 présentent d'excellentes performances d'adhérence à sec, supérieures à celles des compositions correspondantes sans additif fluide (compositions de référence B et C). Elles permettent également l'obtention d'une adhérence après contact avec l'eau qui est maintenue sensiblement au niveau de celle procurée par les compositions de référence B et C, et notamment supérieure ou égale à 0,95 MPa.

L'émission de poussières inhalables de ces mêmes compositions 1 à 17 a été évaluée visuellement par rapport aux compositions de référence sans additif fluide B et C : elle a été trouvée significativement réduite.

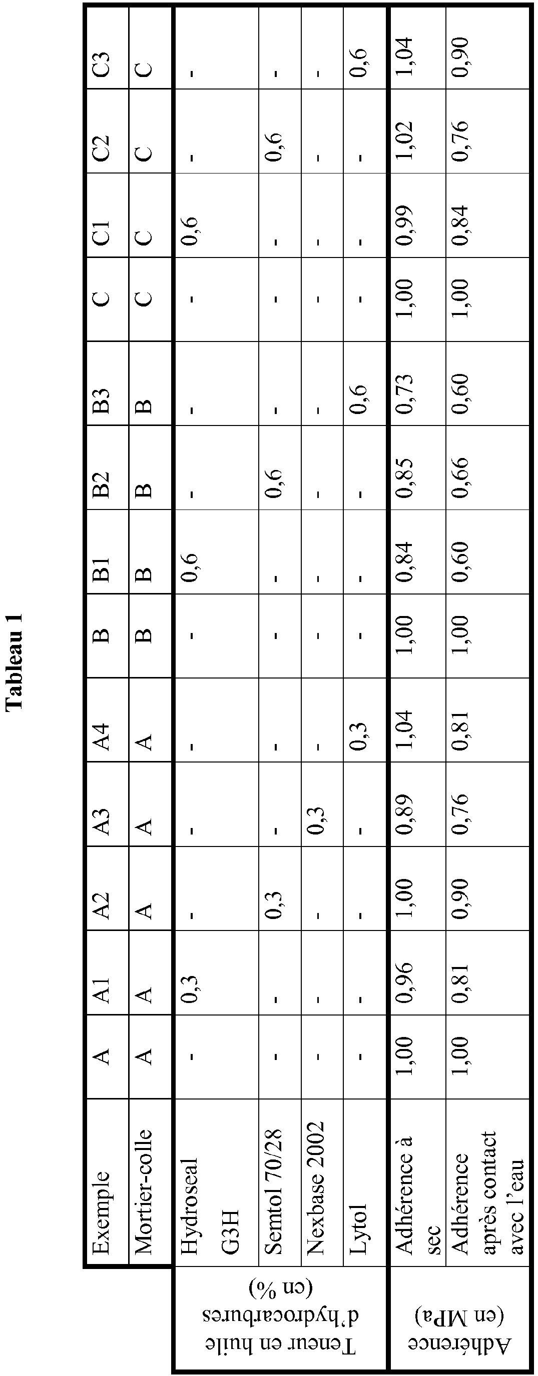

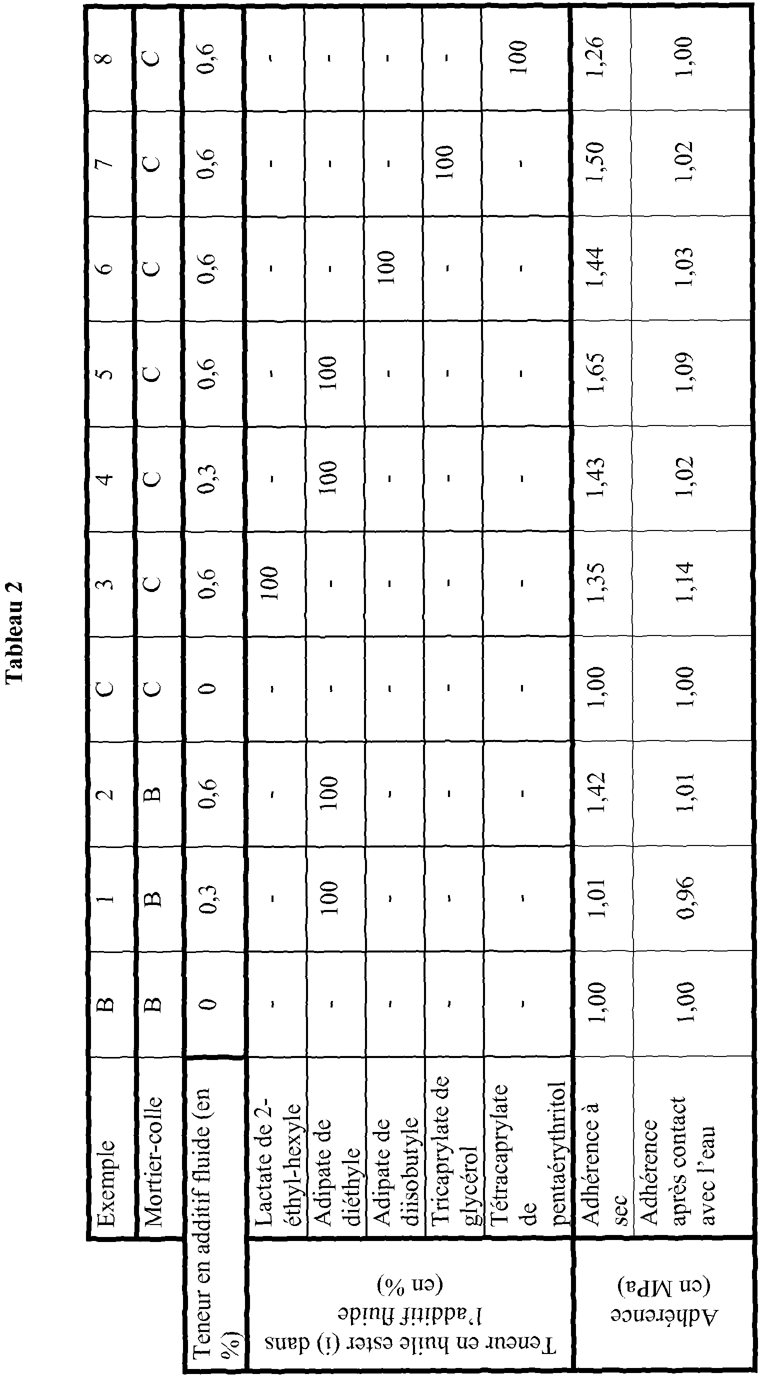

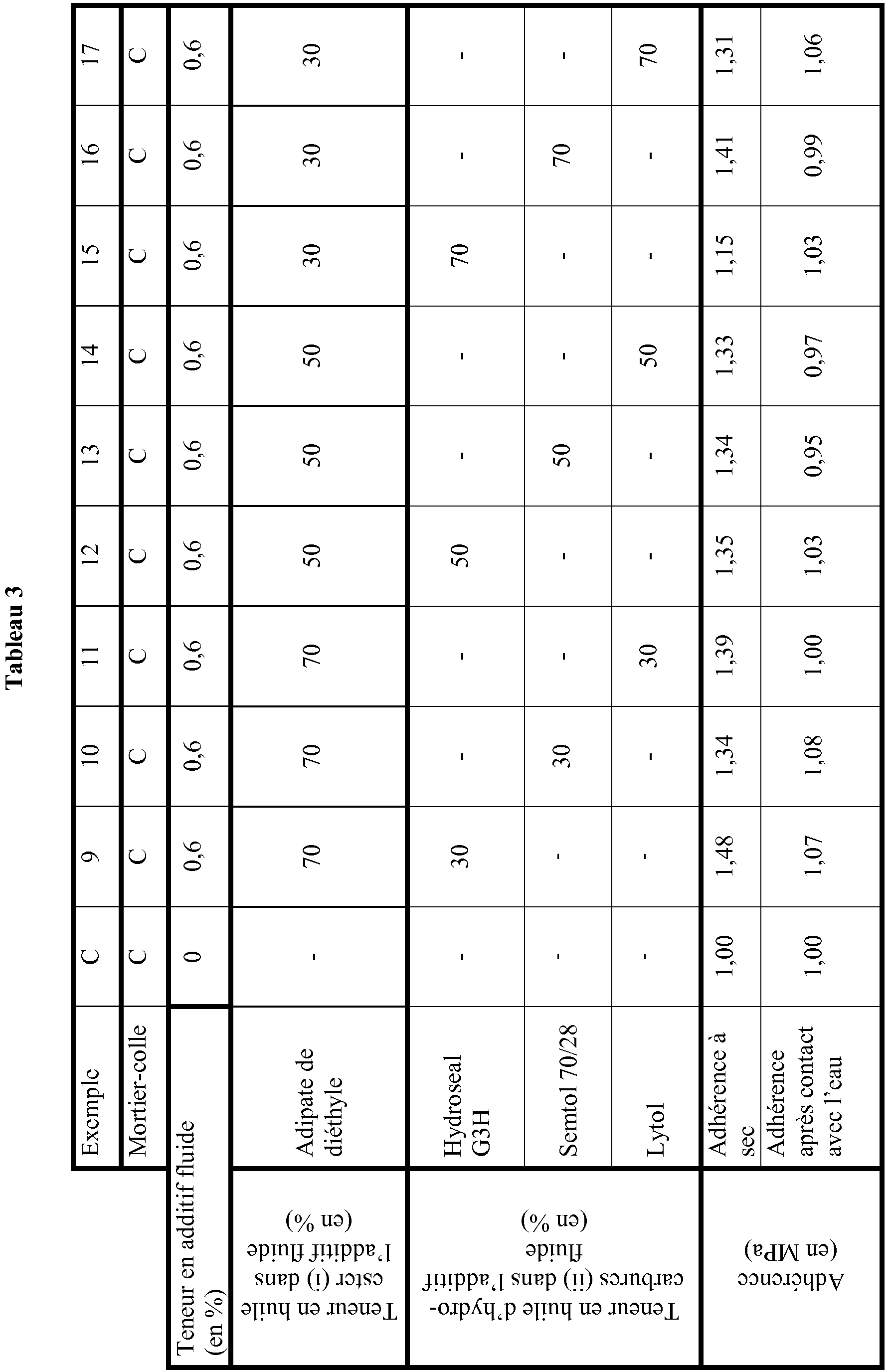

## Revendications

1. Composition pulvérulente de mortier, qui comprend :
- de 10 à 60 % d'un liant minéral,
- de 40 à 90 % d'un matériau inerte sous forme de granulat susceptible d'être aggloméré en phase aqueuse au moyen dudit liant,
- de 0,2 à 1 % d'un additif fluide comprenant de 25 à 100 % d'un composé hydrocarboné linéaire ou ramifié, saturé ou insaturé (i) qui est liquide à température ambiante et qui inclut un ou plusieurs groupe ester -COO- dont le poids total, relatif à la masse molaire dudit composé (i), est compris entre 20 et 50 % .

2. Composition pulvérulente de mortier selon la revendication 1, **caractérisée en ce que** l'on utilise du ciment comme liant minéral et du sable comme granulat de matériau inerte.

3. Composition pulvérulente de mortier selon l'une des revendications 1 ou 2, **caractérisée en ce que** le composé (i) est un mono, di, tri ou tétra ester.

4. Composition pulvérulente de mortier selon l'une des revendications 1 à 3, **caractérisée en ce que** le composé (i) est choisi dans le groupe comprenant :
(a) les mono-esters de formule :
(I) R¹-A-R²
dans laquelle :
- R¹ et R² sont identiques ou différents et représentent un radical hydrocarboné linéaire ou ramifié, saturé ou insaturé, comprenant de 1 à 10 atomes de carbone et éventuellement substitué par un groupe -OH ou -SH ;
- A représente un groupe ester de formule -(CO)O- ou -O(CO)- ;
(b) les di-esters de formule :
(II) R³-A¹-R⁴-A²-R⁵
dans laquelle :
- R³ et R⁵ sont identiques ou différents et représentent un radical hydrocarboné linéaire ou ramifié, saturé ou insaturé, comprenant de 1 à 20 atomes de carbone et éventuellement substitué par un groupe -OH ou -SH ;
- R⁴ est un radical divalent dérivant du radical monovalent ayant la même signification que les radicaux R³ ou R⁵ définis précédemment ;
- A¹ et A² sont identiques ou différents et ont la même signification que le radical A défini précédemment ;
(c) les tri-esters obtenus par condensation :
- d'un acide carboxylique linéaire ou ramifié, saturé ou insaturé, comprenant de 2 à 20 atomes de carbone, éventuellement substitué par un groupe -OH ou - SH, avec
- un composé hydrocarboné, linéaire ou ramifié, saturé ou insaturé, comprenant de 3 à 10 atomes de carbone parmi lesquels 3 atomes distincts sont liés chacun à un groupe -OH ; et
(d) les tétra-esters obtenus par condensation :
- d'un acide carboxylique linéaire ou ramifié, saturé ou insaturé, comprenant de 2 à 20 atomes de carbone, éventuellement substitué par un groupe -OH ou - SH, avec
- un composé hydrocarboné, linéaire ou ramifié, saturé ou insaturé, comprenant de 4 à 10 atomes de carbone parmi lesquels 4 atomes distincts sont liés chacun à un groupe -OH.

5. Composition pulvérulente de mortier selon l'une des revendications 1 à 4, **caractérisée en ce que** le composé organique polaire (i) inclut un ou plusieurs groupe ester pour un poids total compris entre 30 et 50 %.

6. Composition pulvérulente de mortier selon l'une des revendications 1 à 5, **caractérisée en ce que** l'additif fluide comprend en outre de 0 à 75 % d'un composé organique apolaire (ii) liquide à température ambiante.

7. Composition pulvérulente de mortier selon la revendication 6, **caractérisée en ce que** le composé (ii) est choisi parmi les huiles d'origine minérale, les huiles paraffiniques, les polyoléfines ou les mélanges de ces substances.

8. Composition pulvérulente de mortier selon l'une des revendications 1 à 7, **caractérisée en ce qu'**elle comprend de 20 à 40 % du liant minéral et de 60 à 70 % du matériau inerte sous forme de granulat.

9. Composition pulvérulente de mortier selon l'une des revendications 1 à 8, **caractérisée en ce qu'**elle comprend l'additif fluide à raison de 0,3 à 0,6 %.

10. Composition pulvérulente de mortier selon l'une des revendications 1 à 9, **caractérisée en ce qu'**elle comprend en outre, comme liant organique, de 1 à 10 % d'un copolymère comprenant un (ou plusieurs) ester vinylique.

11. Composition pulvérulente de mortier selon la revendication 10, **caractérisée en ce que** le liant organique est un copolymère d'acétate de vinyle, de versatate de vinyle et d'ester maléïque, présent à raison de 5 à 6 %.

12. Utilisation de la composition de mortier telle que définie dans l'une des revendications 1 à 11 pour son gâchage avec de l'eau, en vue de la préparation d'un mortier, d'un enduit mural ou de rebouchage, d'un joint de carrelage ou de produits à base de ciments utilisés dans la construction.

13. Utilisation selon la revendication 12 en vue de la préparation d'un mortier-colle
pour fixer des carreaux de céramique.

## Patentansprüche

1. Pulverförmige Mörtelzusammensetzung, welche umfasst:
- 10 bis 60 % eines mineralischen Bindemittels,
- 40 bis 90 % eines inerten Materials in Form eines Granulats, das geeignet ist, in wässeriger Phase mit dem Bindemittel agglomeriert zu werden,
- 0,2 bis 1 % eines flüssigen Additivs, das 25 bis 100 % einer linearen oder verzweigten, gesättigten oder ungesättigten Kohlenwasserstoffverbindung (i) umfasst, die bei Umgebungstemperatur flüssig ist und die eine oder mehrere Ester-Gruppen -COO-enthält, deren Gesamtgewicht, bezogen auf die Molekularmasse der Verbindung (i), zwischen 20 und 50 % liegt.

2. Pulverförmige Mörtelzusammensetzung nach Anspruch 1,
**dadurch gekennzeichnet, dass** Zement als mineralisches Bindemittel und Sand als Granulat des inerten Materials verwendet wird.

3. Pulverförmige Mörtelzusammensetzung nach einem der Ansprüche 1 oder 2,
**dadurch gekennzeichnet, dass** die Verbindung (i) ein Mono-, Di-, Tri- oder Tetraester ist.

4. Pulverförmige Mörtelzusammensetzung nach einem der Ansprüche 1 bis 3,
**dadurch gekennzeichnet, dass** die Verbindung (i) aus der Gruppe ausgewählt ist, die Folgendes umfasst:
(a) Monoester der Formel:
(I) R¹-A-R²,
wobei:
- R¹ und R² identisch oder verschieden sind und ein linearer oder verzweigter, gesättigter oder ungesättigter Kohlenwasserstoffrest mit 1 bis 10 Kohlenstoffatomen und gegebenenfalls substituiert durch eine Gruppe -OH oder -SH sind;
- A eine Ester-Gruppe der Formel -(CO)O-oder -O(CO)- ist;
(b) Diester der Formel:
(II) R³-A¹-R⁴-A²-R⁵,
wobei:
- R³ und R⁵ identisch oder verschieden sind und ein linearer oder verzweigter, gesättigter oder ungesättigter Kohlenwasserstoffrest mit 1 bis 20 Kohlenstoffatomen und gegebenenfalls substituiert durch eine Gruppe -OH oder -SH sind;
- R⁴ ein zweiwertiger Rest ist, der von einem einwertigen Rest mit derselben Bedeutung wie die vorstehend definierten Reste R³ oder R⁵ abgeleitet ist;
- A¹ und A² identisch oder verschieden sind und dieselbe Bedeutung haben wie der vorstehend definierte Rest A;
(c) Triester, die erhalten werden durch Kondensation:
- einer linearen oder verzweigten, gesättigten oder ungesättigten Carbonsäure mit 2 bis 20 Kohlenstoffatomen, gegebenenfalls substituiert durch eine Gruppe -OH oder -SH, mit
- einer linearen oder verzweigten, gesättigten oder ungesättigten Kohlenwasserstoffverbindung mit 3 bis 10 Kohlenstoffatomen, unter denen 3 bestimmte Atome jeweils mit einer Gruppe -OH verbunden sind; und
(d) Tetraester, die erhalten werden durch Kondensation:
- einer linearen oder verzweigten, gesättigten oder ungesättigten Carbonsäure mit 2 bis 20 Kohlenstoffatomen, gegebenenfalls substituiert durch eine Gruppe -OH oder -SH, mit
- einer linearen oder verzweigten, gesättigten oder ungesättigten Kohlenwasserstoffverbindung mit 4 bis 10 Kohlenstoffatomen, unter denen 4 bestimmte Atome jeweils mit einer Gruppe -OH verbunden sind.

5. Pulverförmige Mörtelzusammensetzung nach einem der Ansprüche 1 bis 4,
**dadurch gekennzeichnet, dass** die polare organische Verbindung (i) eine oder mehrere Ester-Gruppen für ein Gesamtgewicht zwischen 30 und 50 % enthält.

6. Pulverförmige Mörtelzusammensetzung nach einem der Ansprüche 1 bis 5,
**dadurch gekennzeichnet, dass** das flüssige Additiv ferner 0 bis 75 % einer apolaren organischen Verbindung (ii) umfasst, die bei Umgebungstemperatur flüssig ist.

7. Pulverförmige Mörtelzusammensetzung nach Anspruch 6,
**dadurch gekennzeichnet, dass** die Verbindung (ii) aus Ölen mineralischen Ursprungs, Paraffinölen, Polyolefinen oder Mischungen dieser Substanzen ausgewählt ist.

8. Pulverförmige Mörtelzusammensetzung nach einem der Ansprüche 1 bis 7,
**dadurch gekennzeichnet, dass** diese 20 bis 40 % mineralisches Bindemittel und 60 bis 70 % inertes Material in Form eines Granulats umfasst.

9. Pulverförmige Mörtelzusammensetzung nach einem der Ansprüche 1 bis 8,
**dadurch gekennzeichnet, dass** diese das flüssige Additiv in einer Menge von 0,3 bis 0,6 % umfasst.

10. Pulverförmige Mörtelzusammensetzung nach einem der Ansprüche 1 bis 9,
**dadurch gekennzeichnet, dass** diese außerdem als organisches Bindemittel 1 bis 10 % eines Copolymers umfasst, das einen (oder mehrere) Vinylester umfasst.

11. Pulverförmige Mörtelzusammensetzung nach Anspruch 10,
**dadurch gekennzeichnet, dass** das organische Bindemittel ein Copolymer von Vinylacetat, Vinylversatat und Maleinsäureester ist, das in einer Menge von 5 bis 6 % vorliegt.

12. Verwendung der Mörtelzusammensetzung, wie in einem der Ansprüche 1 bis 11 definiert, zum Anrühren mit Wasser für die Herstellung eines Mörtels, Wandputzes oder Kitts, einer Fliesenfuge oder von Produkten auf der Basis von Zementen, die im Bauwesen verwendet werden.

13. Verwendung nach Anspruch 12,
für die Herstellung eines Klebemörtels zur Befestigung von Keramikfliesen.

## Claims

1. Pulverulent mortar composition which comprises:
- from 10% to 60% of an inorganic binder,
- from 40% to 90% of an inert material in granule form that can be agglomerated in aqueous phase by means of said binder,
- from 0.2% to 1% of a fluid additive comprising from 25% to 100% of a saturated or unsaturated, linear or branched hydrocarbon compound (i) which is liquid at ambient temperature and which includes one or more ester groups -COO- of which the total weight, relative to the molar mass of said compound (i), is between 20% and 50%.

2. Pulverulent mortar composition according to Claim 1, **characterized in that** cement is used as inorganic binder and sand is used as granules of inert material.

3. Pulverulent mortar composition according to either of Claims 1 and 2, **characterized in that** the compound (i) is a mono-, di-, tri- or tetra-ester.

4. Pulverulent mortar composition according to any of Claims 1 to 3, **characterized in that** the compound (i) is selected from the group consisting of:
(a) mono-esters of formula:
(I) R¹-A-R²
in which:
- R¹ and R² are identical or different and represent a saturated or unsaturated, linear or branched hydrocarbon radical which contains from 1 to 10 carbon atoms and is optionally substituted by an -OH or -SH group;
- A represents an ester group of formula -(CO)O- or -O(CO)-;
(b) di-esters of formula:
(II) R³-A¹-R⁴-A²-R⁵
in which:
- R³ and R⁵ are identical or different and represent a saturated or unsaturated, linear or branched hydrocarbon radical which contains from 1 to 20 carbon atoms and is optionally substituted by an -OH or -SH group;
- R⁴ is a divalent radical deriving from the monovalent radical having the same meaning as radicals R³ or R⁵ defined above;
- A¹ and A² are identical or different and have the same meaning as the radical A defined above;
(c) tri-esters obtained by condensing:
- a saturated or unsaturated, linear or branched carboxylic acid which contains from 2 to 20 carbon atoms and is optionally substituted by an -OH or -SH group, with
- a saturated or unsaturated, linear or branched hydrocarbon compound which contains from 3 to 10 carbon atoms, of which 3 separate atoms are each bonded to an -OH group; and
(d) tetra-esters obtained by condensing:
- a saturated or unsaturated, linear or branched carboxylic acid which contains from 2 to 20 carbon atoms and is optionally substituted by an -OH or -SH group, with
- a saturated or unsaturated, linear or branched hydrocarbon compound which contains from 4 to 10 carbon atoms, of which 4 separate atoms are each bonded to an -OH group.

5. Pulverulent mortar composition according to any of Claims 1 to 4, **characterized in that** the polar organic compound (i) includes one or more ester groups for a total weight of between 30% and 50%.

6. Pulverulent mortar composition according to any of Claims 1 to 5, **characterized in that** the fluid additive further comprises from 0% to 75% of an apolar organic compound (ii) which is liquid at ambient temperature.

7. Pulverulent mortar composition according to Claim 6, **characterized in that** the compound (ii) is selected from mineral oils, paraffinic oils, polyolefins, or mixtures of these substances.

8. Pulverulent mortar composition according to any of Claims 1 to 7, **characterized in that** it comprises from 20% to 40% of the inorganic binder and from 60% to 70% of the inert material in granule form.

9. Pulverulent mortar composition according to any of Claims 1 to 8, **characterized in that** it comprises the fluid additive at from 0.3% to 0.6%.

10. Pulverulent mortar composition according to any of Claims 1 to 9, **characterized in that** it further comprises, as organic binder, from 1% to 10% of a copolymer comprising one (or more) vinyl ester(s).

11. Pulverulent mortar composition according to Claim 10, **characterized in that** the organic binder is a copolymer of vinyl acetate, vinyl versatate, and maleic ester, present at from 5% to 6%.

12. Use of the mortar composition as defined in any of Claims 1 to 11 for mixing thereof with water, for the purpose of producing a mortar, a spackling or wall coating, a grout, or cement-based products used in construction.

13. Use according to Claim 12 for the purpose of producing an adhesive mortar for fixing ceramic tiles.
